(19) Europäisches Patentamt
European Patent Office
Office européen des brevets

(11) Publication number: **0 121 984 B2**

(12) **NEW EUROPEAN PATENT SPECIFICATION**

(45) Date of publication of the new patent specification: **29.11.95**

(51) Int. Cl.[6]: **C08G 69/26**

(21) Application number: **84300744.4**

(22) Date of filing: **07.02.84**

Divisional application 88107815 filed on 16.05.88.

The file contains technical information submitted after the application was filed and not included in this specification

# (54) Polyamide compositions.

(30) Priority: **16.02.83 US 466899**

(43) Date of publication of application: **17.10.84 Bulletin 84/42**

(45) Publication of the grant of the patent: **18.01.89 Bulletin 89/03**

(45) Mention of the opposition decision: **29.11.95 Bulletin 95/48**

(84) Designated Contracting States: **BE CH DE FR GB IT LI LU NL SE**

(56) References cited:
**DE-A- 2 651 534**
**US-A- 4 218 509**
**US-A- 4 238 603**

**Polymer, Vol.17, 1976, p.875-892**

(73) Proprietor: **AMOCO CORPORATION**
**200 East Randolph Drive**
**Chicago**
**Illinois 60601 (US)**

(72) Inventor: **Poppe, Wassily**
**105 North Main Street**
**Lombard**
**Illinois 60148 (US)**
Inventor: **Chen, Yu-Tsai**
**22 W 401 McCarron Road**
**Glen Ellyn**
**Illinois 60137 (US)**
Inventor: **Autry, Larry Wayne**
**4793 Lake Valley Drive**
**Lisle**
**Illinois 60532 (US)**
Inventor: **Richardson, Joel Albert**
**1643 Cove Court**
**Naperville**
**Illinois 60565 (US)**

(74) Representative: **Ritter, Stephen David et al**
**Mathys & Squire**
**100 Grays Inn Road**
**London WC1X 8AL (GB)**

EP 0 121 984 B2

## Description

Background of the Invention

Field of the Invention

The field of this invention relates to a crystalline copolyamides or terpolyamides from hexamethylene diamine (HMDA) and either mixtures of terephthalic acid (TA) and adipic acid (AA) or mixtures of TA, isophthalic acid (IA) and AA.

Filled compositions from HMDA and TA, AA and HMDA and TA, IA and AA having heat deflection temperatures in the range of 240 to 350 °C are unknown to the prior art. Likewise, processes for making crystalline copolyamides from HMDA and the aforementioned diacids giving polymers of injection moldable quality have not been contemplated in the prior art.

References of interest include U.S. Patent 3,553,288, which discloses polyester blends, some components of which can be TA, IA or AA. U.S. Patent 4,218,509 discloses various fibers. Transparent terpolyamides from TA, IA, AA and HMDA moieties are disclosed in GB—A—1210 592. German Offenlegungsschrift 2,651,534 discloses fiber-forming random terpolyamides including TA and IA and very small amounts of AA with HMDA; JP—B 71018809, JP—A 52085516 and JP—B 71028218 disclose fibers from TA, IA, AA and HMDA polyamides. Other references include U.S. Patent 3,551,548 which discloses amorphous polyamides, U.S. Patent 3,526,524 which relates to copolyamides from adipic acid and U.S. Patent 4,238,603 which relates to amorphous fibers which can be crystallized after the drawn essentially amorphous fiber is heat treated at temperatures above the glass transition temperature. In reviewing all these references it is clear that crystalline copolyamides manufactured from HMDA and mixtures of TA and AA or HMDA and mixtures of TA, IA and AA including filled compositions of these polymers having heat deflection temperatures of 240 to 305 °C and having a molecular weight of 5,000 to 40,000 and having tensile strengths of 20,000 psi to 40,000 psi (137—276 MPa) have not been contemplated by the prior art.

The general object of this invention is to provide molding compositions reinforced with glass fibers, glass beads, minerals or a mixture thereof made from polyamides derived from HMDA and mixtures of TA and AA or from HMDA and mixtures of TA, IA and AA. Other objects include a process for the manufacture of the crystalline polyamide and catalysts for the polycondensation reaction and fibers laminate and molded objects made from the polyamides.

We have now found that filled molded copolyamides can be obtained from HMDA and mixtures of TA and AA or from HMDA and mixtures of TA, IA and AA. The mole ratio of TA:IA:AA is 60—90 : 25—0 : 35—5, preferably 65—80 : 25—5 : 15—10. The crystalline polyamides, when filled and molded with glass fiber, glass beads, minerals or a mixture thereof have a heat deflection temperature in the range of 240 to 305 °C, as determined by ASTM Method D648. This is an unusual feature and completely unexpected from the prior art since comparable polyamides have much lower heat deflection temperatures. The importance of having high heat deflection temperatures is that it enables the injected copolyamides to be used in applications such as the hood of an automobile, shroud for a lawn mower, chain saw guard, and in electrical connector applications. In addition to the high heat deflection temperature, the tensile strength of these copolyamides generally is 20,000 to 40,000 psi (137—276 MPa) which is as high or higher than that of die cast aluminum or zinc while the specific gravity of our copolyamides is about one-half of that of aluminum or zinc. Thus, these copolyamides are particularly useful in transportation equipment applications. These filled copolyamides also may have a flexural modulus in excess of 1,000,000 up to 3,000,000 psi (6.9 MPa—20.7 MPa) as determined by ASTM Method D790. This property is advantageous in applications requiring dimensional stability. The molecular weight of the copolyamides preferably is 5,000 to 40,000.

Our copolyamide composition can be filled with 10 to 60 weight percent glass fibers, glass beads, mineral fibers, graphite fibers, or a mixture thereof. Advantageously, the molding composition may contain from 20 to 50 weight percent of glass fibers, glass beads, mineral fibers, graphite fibers, or a mixture thereof. Our studies have shown that high heat deflection temperatures can be achieved and also the cost of molding products derived from copolyamides can be reduced by employing such fillers. The filled copolyamides are much more economical than molding compositions prepared without the use of the glass fibers, glass beads, minerals, or graphite fillers. The use of polyimides and amides as engineering plastics has been limited only by their relatively high cost. Thus, employing our invention, through which the inherent cost can be brought down, the commercial application of polyamides, requiring very high flexural strength can be greatly expanded.

We have prepared monofilaments using our novel polyamides. The process starts with a single screw extruder to supply a melt for conversion to fiber. The die for monofilament is similar to the multifilament die.

The monfilament process is a slower operation, typically 50 to 200 feet/minute (152—608 m/minute). For the melt spinning operations, 40 to 80 feet/minute (121—242 m/minute) was the speed used for the monofilament processing. The monofilament, on the other hand, is water quenched with much less melt draw down. The monofilament is subsequently drawn with heated drawing systems. The monofilament drawing is done in-line using heating ovens. The results are shown in Table 1 (for details of polymerization see Example A).

Suitably, in our processes for the manufacture of polyamides the production can be divided into the prepolymer and final polycondensation sections. The prepolymer section may be batch, batch-continuous or fully-continuous and consists of one or more stirred tank reactors of suitable design. The prepolymer product of this stage is a polyamide oligomer with an inherent viscosity (60/40 phenol/TCE, 30 °C) of 0.1 to 0.2 dl/g.

Batch production of prepolymer may be carried out in any suitable designed stirred reactor which can process materials of high viscosity. Feed materials consisting of diacids (TA, IA, and AA in the desired ratios), HMDA and additives are charged to the reactor at 175 °F (80 °C). Water content of the resulting solution should be no more than 15% by weight. Temperatures are then raised to 500 to 600 °F (260—316 °C) as quickly as possible.

TABLE 1

| Terpolyamide Monofilament | | | | | | | |
|---|---|---|---|---|---|---|---|
| Sample TA/IA/AA—HMDA | $T_m$ (C °) | Melt Temp (C °) | Denier (g/9000m) | Elongation (%) | Tenacity (g/d) | Initial Modulus (g/d) | Draw Ratio (X:1.0) |
| Composition 65/25/10—100 | 310 | 334 | 650 | 9.2 | 4.0 | 56.0 | 4.4 |
| | | 340 | ~900 | ~11.5 | ~5.8 | | 5.2 |
| | | | 1050 | 21.3 | 3.6 | 54.7 | 5.2 |

Pressures are allowed to build to the limits of the equipment. After the target temperature is reached, the pressure is reduced to atmospheric over a period of 5 to 120 minutes. The polymer is then allowed to flow out of the reactor and is caught under an inert gas blanket. The prepolymer is then ground and fed to the final poly-condensation section.

Our novel injection moldable crystalline polyamide copolymers comprise substantially the following recurring structural units:

A) 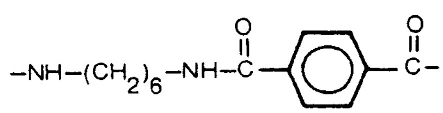

B) 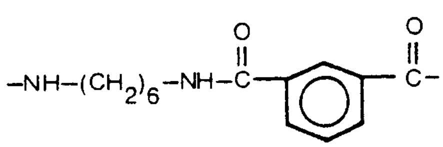

and

C) 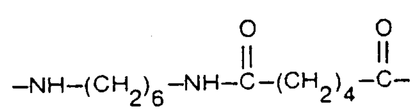

wherein the mole ratio of A:B:C units is 60—90 : 25—0 : 35—5, preferably 65—80 : 25—5 : 15—10. The injection molding of our copolyamides is accomplished by injecting the copolyamide into a mold maintained at a temperature of preferably 100 to 200 °C. In this process, a 20-second to 1-minute cycle is used with a barrel temperature of 300 to 350 °C. These temperatures will vary depending on the Tg and Tm of the polyamide being molded. These copolyamides have excellent heat deflection and other physical properties.

With the addition of reinforcing materials, particularly the physical properties such as flexural strength, are improved. Thus the copolyamides may contain from 10 to 60 percent by weight of glass fibers, glass

beads, graphite fibers, minerals, or mixtures thereof. In the preferred range, the copolyamides contain 20 to 50 percent by weight of glass fibers, glass beads, graphite fibers, or mixtures thereof. Suitably, the reinforcing materials can be glass fibers, glass beads, glass spheres, or glass fabrics. The preferred fillers are glass fibers. These are made of alkali-free boron-silicate glass or alkali containing C-glass. The thickness of the fibers is suitably, on the average, between 3 μm and 50 μm. It is possible to use long fibers in the range of from 5 mm to 50 mm and also short fibers with each filament length of 0.05 mm to 5 mm. In principle, any standard commercial grade glass fiber may be used.

Compositions may also be produced comprising the copolyamides of the invention and 1 to 99 weight percent of Nylon 6,6.

The reinforced polyamide polymers may be prepared by any conventional method. Suitably, so-called roving endless glass fiber strands are coated with the polyamide melt and subsequently granulated. Advantageously the cut fibers and glass beads may also be placed with granulated copolyamides and the resulting mixture melted in a conventional extruder, or alternatively, the fibers may be determined, introduced into the copolyamides, and melted through a suitable inlet in the extruder. The injection molding conditions are given in Table 2 below.

TABLE 2

| | |
|---|---|
| Mold Temperature<br>Injection Pressure<br>Back Pressure<br>Cycle Time | 100° to 200°C<br>6,000 to 15,000 psi (41—103 MPa) and held for 10 to 20 seconds<br>100 to 1,000 psi (689—6890 KPa)<br>20 to 60 seconds |
| Extruder | |
| Nozzle Temperature | 320° to 340°C |
| Barrels | |
| Front Heated to<br>Screw | 300° tyo 350°C<br>20 to 60 revolutions/minute |

The following examples illustrate the preferred embodiments of this invention. It will be understood that the examples are for illustrative purposes only and do not purport to be wholly definitive with respect to the conditions or scope of the invention.

Our preferred process for prepolymer production utilizes four major units. These are the salt reactor, the surge and aging vessel and the first polycondensation reactor. Steam, advantageously, is used for pressure control on the first three stages. Steam use is helpful, since we can control the extent of the reaction without worrying about unknown pressure leaks. Steam is also useful to our process, since we use no water or low amounts of water in our feed material. When pressure make-up is required, use of nitrogen or other inert gas can cause a reduction in water partial pressure and a release of water from the salt. When the operating pressure is greater than the equilibrium steam partial pressure at operating temperatures, it will be advantageous to use an inert gas in addition to steam. In prior art processes, steam comes from the excess water in the feed, but in our novel process the extra water will be generated by the polycondensation reaction.

Feed materials can suitably be introduced to the first stage of our process, the salt reactor, in any of several ways. For example, pre-weighed charges can be fed to the salt reactor vie lock hoppers. Another suitable procedure is a slurry feed of the HMDA and diacids. This has the advantage of putting the batch stage into less expensive equipment and reduces negative effects of cyclic operation on the first two stages. It also would allow easy analysis of feeds prior to its introduction into the process. Advantageously the reactants can be charged as a paste via an extruder. Such a feed system could preheat the feed materials and would allow a minimal water level in the feed. The primary limitation of this system is that high temperature analytical equipment must be employed.

The salt reactor is a stirred tank reactor agitated by downward flowing pitched blade turbines. Impeller speed should be great enough to keep solids suspended until reacted. Pressure capability should be enough to prevent volatilization of the lowest boiling monomer component. Free water levels in the salt reactor can range from 0 percent (anhydrous feed materials) to about 25 to 30 percent. This is governed by feeding requirements and by phase equilibrium demands. Small amounts of water provide significant freezing point depression and improve processability of the various high melting salts.

The second vessel is a surge or aging vessel. It is at the same pressure and temperature as the salt reactor. It serves two functions. It translates the batch operation of the salt reactor to continuous operation when lock hopper feeding is used. It also allows the salt additional residence time to form fully and stabilize. The second stage also minimizes the possibility that unreacted monomer could pass through to the polycondensation reactor. The surge reactor can be non-agitated, but potential problems with gel justify the use of an agitated reactor. The surge or aging vessel may be eliminated when a continuous feed system is provided.

The third stage of our process is the first polycondensation reactor. This reactor is a continuous stirred tank reactor and has a reduced pressure and an increased temperature over the two prior reactors. This reactor can be agitated by either a pitched blade turbine or a helical anchor. A helical anchor permits higher product viscosities and improved productivity in our final extruder reactor. An important factor in the success with our novel process has been control of melt rheology in the first polycondensation reactor by keeping inherent viscosity low. This concept allows us to minimize gel and polymer build-up problems in the first polycondensation reactor, but it does force more work on the finishing reactor. The balance between the first polycondensation reactor and the extruder will vary for each different resin just as the water level requirements in the feed will vary.

The final polycondensation stage of the process is a twin screw extruder reactor. The twin screw extruder is an advantageous component in our process as it allows us to easily handle the stiff, high melting point resins that we manufacture. Other types of finishing reactors such as disk ring reactors, agitated stranding devolatilizers, and thin film evaporators can be utilized; however, some of these may have difficulty in handling the high viscosity of our resins. The inherent viscosity (I.V.) is measured in 60/40 phenol/tetrachloroethane at 30°C.

TABLE 3

| A. Terpolyamide 65/25/10 (TA/IA/AA)—HMDA | | |
|---|---|---|
| Process Conditions | Salt Reactor | Transition Reactor |
| Pressure (PSIG) (MPa)<br>Temperature °F (°C)<br>Residence Time (min.)<br>I.V. (dl/g) | 450 (3.1)<br>450 (232)<br>—<br>— | 425 (2.9)<br>540 (232)<br>—<br>— |
| A. Terpolyamide 65/25/10 (TA/IA/AA)—HMDA | | |
| Process Conditions | 1st Polycond. Reactor | ZSK—30 Extruder |
| Pressure (PSIG) (MPa)<br>Temperature °F (°C)<br>Residence Time (min.)<br>I.V. (dl/g) | 350 (2.4)<br>460 (238)<br>30 min.<br>0.12 | atm. (0.1)<br>670 (354)<br>2 min.<br>1.25 |
| B. Terpolyamide 75/15/10 (TA/IA/AA)—HMDA | | |
| Process Conditions | Salt Reactor | Transition Reactor |
| Pressure (PSIG)<br>Temperature (°F)<br>Residence Time (min.)<br>I.V. (dl/g) | 450 (3.1)<br>440 (227)<br>—<br>— | 450 (3.1)<br>415 (213)<br>—<br>— |
| B. Terpolyamide 75/15/10 (TA/IA/AA)—HMDA | | |
| Process Conditions | 1st polycond. Reactor | ZSK—30 Extruder |
| Pressure (PSIG) (MPa)<br>Temperature (°F) (°C)<br>Residence Time (min.)<br>I.V. (dl/g) | 365 (2.5)<br>460 (238)<br>30 min.<br>0.12 | —<br>690 (366)<br>2 min.<br>1.0 |

Catalysts can suitably be employed in our process. These catalysts include the following compounds: $NaH_2Po_2$, $H_3PO_2$, $H_3PO_4$, $H_2SO_4$, HCl, $Na_3PO_3$, $NaH_2PO_4 \cdot H_2O$. The amount of catalyst present can e.g.

vary from 0.01 to 0.2 weight percent of the total weight of the reactants.

(The polymers referred to in Tables 4 to 9 were prepared by the procedure given in Table 3).

TABLE 4
MECHANICAL PROPERTIES OF 45% GLASS-FIBER FILLED POLYAMIDES AND TWO DIE CAST METALS AT ROOM TEMPERATURE

| | Tensile | | Flexural | | |
|---|---|---|---|---|---|
| Sample | Strength ASTM Method D638 M psi (MPa) | Elongation ASTM Method D638 % | Strength ASTM Method D790 M psi (MPa) | Modulus ASTM Method D790 MM psi (GPa) | Notched Izod ASTM Method D256 ft-lb/in (J/m) |
| Nylon 6,6 | 33.0 (227) | 5.5 | 50.3 (347) | 1.84 (12.7) | 3.4 (1880) |
| Die cast Mg | 34.0 (234) | ~8.0 | — | 6.50 (44) | — |
| Die cast Al | 35.0 (241) | ~9.0 | — | 10.00 (69) | — |
| 65/25/10 | 37.0 (255) | 5.1 | 51.5 (355) | 1.85 (12.7) | 3.4 (1880) |
| 75/15/10 | 38.7 (267) | 4.8 | 55.3 (381) | 2.46 (17) | 3.4 (1880) |
| 65/25/10 (60% GF) | 40.2 (277) | 4.8 | 59.0 (407) | 2.43 (16.7) | 4.9 (2709) |

Moldability: Good, shorter cycle time and lower mold shrinkage than Nylon 6,6

TABLE 4 (continued)

| Sample | Tensile Impact ASTM Method D638 ft-lb in$^2$ (kJ/m$^2$) | HDT at 264 psi (1.82 MPa) ASTM Method D648 °F (°C) | Water Absorption % |
|---|---|---|---|
| Nylon 6,6 | 97 (205) | 493 (256) | 0.65 |
| Die cast Mg | — | — | — |
| Die cast Al | — | — | — |
| 65/25/10 | 136 (288) | 574 (301) | 0.21 |
| 75/15/10 | 100 (212) | >580 (>304) | 0.15 |
| 65/25/10 (60% GF) | 128 (271) | 578 (303) | 0.21 |

Moldability: Good, shorter cycle time and lower mold shrinkage than Nylon 6,6

TABLE 5
MATERIAL PROPERTIES OF REINFORCED AND
75/15/10 TA/IA/AA TERPOLYAMIDE

| Sample | Graphite Fiber % | Glass Fiber % | Tensile Strength ASTM Method D638 M psi (MPa) | Tensile Elong. ASTM Method D638 % | Flexural Strength ASTM Method D790 M psi (MPa) | Flexural Modulus ASTM Method D790 MM psi (GPa) | Notched Izod ASTM Method D256 ft-lb/in (J/m) | HDT (At 264 psi) ASTM Method D648 °F (°C) | Water Absorp. % |
|---|---|---|---|---|---|---|---|---|---|
| 75/15/10 | 25 | 25 | 28.1 (194) | 3.0 | 41.6 (287) | 2.74 (18,9) | 1.6 (885) | 580 (304) | 0.24 |
| 75/15/10 | 0 | 45 | 38.7 (267) | 4.8 | 55.3 (381) | 2.46 (17) | 3.4 (1880) | 580 (304) | 0.15 |

TABLE 6
MATERIAL PROPERTIES OF 65/25/10 TA/IA/AA TERPOLYAMIDE AT HIGH TEMPERATURES

| | | Tensile | | Flexural | |
|---|---|---|---|---|---|
| Testing Temperature °F (°C) | Glass Fiber % | Strength ASTM Method D638 M psi (MPa) | Elongation ASTM Method D638 % | Strength ASTM Method D790 M psi (MPa) | Modulus ASTM Method D790 MM psi (G.Pa) |
| 65/25/10 TA/IA/AA | Terpolyamide | (no annealing required) | | | |
| 73 (23) | 45 | 37.5 (258) | 5.1 | 50.1 (345) | 1.70 (11.7) |
| 300 (149) | 45 | 12.9 (89) | 7.2 | 20.2 (139) | 0.91 (6.2) |
| 500 (260) | 45 | 9.1 (63) | 7.5 | 13.0 (89.6) | 0.65 (4.4) |

TABLE 7

| MECHANICAL PROPERTIES OF 45% GLASS-FIBER FILLED 65/25/10 TA/IA/AA TERPOLYAMIDE AGED AT 400 °F (204 °C) 0 hour at 400 °F (204 °C) | | | | |
|---|---|---|---|---|
| Irganox 1098 % | 0 hour at 400 °F (204 °C) | | | |
| | Ten. Str. ASTM Method D638 M psi (MPa) | Ten. Elong. ASTM Method D638 % | Flex. Str. ASTM Method D790 M psi (MPa) | Flex. Mod. ASTM Method D790 MM psi (GPa) |
| 0<br>1 | 32.3 (223)<br>29.5 (203) | 4.2<br>4.5 | 46.1 (318)<br>43.5 (300) | 1.77 (12.2)<br>1.78 (12.3) |
| | 600 hours at 400 °F (204 °C) | | | |
| 0<br>1 | 15.5 (107)<br>25.7 (177) | 2.3<br>3.5 | 23.9 (165)<br>33.8 (233) | 1.61 (11.0)<br>1.78 (12.3) |
| | 1000 hours at 400 °F (204 °C) | | | |
| 0 | 10.2 (32%)<br>18.2 (63.4%) | 1.7 (41%)<br>2.8 (62.2%) | 10.5 (22%)<br>32.1 (73.8%) | 1.06 (60%)<br>1.73 (97%) |

TABLE 8
MATERIAL STRENGTH OF 65/25/10 TA/IA/AA
TERPOLYAMIDE LAMINATES

| | | Compression molding | | Flexural | | |
|---|---|---|---|---|---|---|
| 12 layers Glass % Wt | 8 layers Graphite % Vol | Temp. °F (°C) | Pressure psi (MPa) | Strength ASTM Method D790 M psi (MPa) | Modulus ASTM Method D790 MM psi (GPa) | Horizontal Shear ASTM Method D638 M psi (MPa) |
| 65/25/10 TA/IA/AA | Terpolyamide | | | 65/25/10 TA/1A/AA | Terpolyamide | |
| 71 | — | 655 (346) | 600 (4.1) | 109.3 (753) | 4.47 (30.8) | 9.19 (63.3) |
| — | 60 | 650 (343) | 600 (4.1) | 130.0 (896) | 9.66 (66.6) | 9.76 (67.2) |
| — | 60 | 655 (346) | 600 (4.1) | 137.0 (944) | 9.87 (68.0) | 9.80 (67.6) |

TABLE 9
MATERIAL PROPERTIES OF 45% GLASS-FIBER FILLED NYLON 6,6 and 65/25/10 TA/IA/AA TERPOLYAMIDE

| Sample | Tensile Strength ASTM Method D638 M psi (MPa) | Tensile Elong. ASTM Method D638 % | Flexural Strength ASTM Method D790 M psi (MPa) |
|---|---|---|---|
| 1. ASTM Standard Condition | | | |
| Nylon 6,6 | 33.0 (227) | 5.5 | 50.3 (347) |
| 65/25/10 | 37.9 (261) | 5.1 | 51.5 (355) |
| 2. After 1000 hours of water immersion | | | |
| Nylon 6,6 | 20.9 (63% (144) | 4.9 (89%) | 29.1 (57%) (201) |
| 65/25/10 | 25.9 (68%) (179) | 3.6 (70%) | 41.1 (80%) (284) |
| 3. Equilibrium Condition | | | |
| Nylon 6,6 | 17.5 (121) | 5.5 | 26.5 (183) |
| (2600 hours of water immersion) | | | |

| Sample | Flexural Modulus ASTM Method D790 MM psi (GPa) | HDT (at 264 psi (1.8 MPa) ASTM Method D648 °F (°C) | Water Absorp. % | Dimens. Charge % |
|---|---|---|---|---|
| 1. ASTM Standard Condition | | | | |
| Nylon 6,6 | 1.84 (12.6) | 493 (256) | 0.65 | 0.04 |
| 65/25/10 | 1.85 (12.7) | 574 (301) | 0.21 | 0.00 |
| 2. After 1000 hours of water immersion | | | | |
| Nylon 6,6 | 0.95 (51%) (6,6) | 480 (249) | 3.31 | 0.14 |
| 65/25/10 | 1.79 (97%) (12,3) | 571 (300) | 0.99 | 0.05 |
| 3. Equilibrium Condition | | | | |
| Nylon 6,6 (2600) | 0.88 (6.0) | 464 (240) | 4.76 | 0.24 |
| 65/25/10 (2600 hours of water immersion) | | | 1.43 | 0.08 |
| 65/25/10 (55% glass fiber-2600 hours of water immersion) | | | 1.08 | 0.02 |

Example A

65/25/10/100 TA/IA/AA/HMDA parts by molar ratio Terpolyamide:

The reactants are loaded into the 4CV Helicone reactor which has been preheated to 200°—300°F (93—149°C). The temperature control is set at 605°F (318°C). The agitator is at the maximum speed (47 rpm). The reactor pressure rises to 120 psi (0.8 MPa) in 16 minutes. The melt temperature is 438°F (226°C). The reactor pressure is controlled at 120 psi (0.8 MPa) for 5 minutes as the melt temperature rises to 471°F (244°C). The reactor pressure is then vented to 100 psi (689 KPa) over a two minute period. The reactor pressure is controlled at 100 psi (689 KPa) until the melt temperature reaches 580°F (304°C). The reactor is then vented to atmospheric pressure over a six-minute period. A slow nitrogen sweep is applied to the reactor. The melt temperature reaches 609°F (321°C) after 5 minutes at atmospheric pressure. The reaction is then stopped. The resin I.V. is determined to be 1.35 dl/g. The run time is 50 minutes.

TABLE 10

| MECHANICAL PROPERTIES OF TERPOLYAMIDE | |
|---|---|
| Run Number | 4CV37 |
| TA/IA/AA Mole Ratio | 65/25/10 |
| Run Time, minutes | 47 |
| Capping Agent, mole %[a] | None |
| Water[b] | None |
| Stabilizer[c] | Yes |
| Resin I.V., dl/g | 1.36 |
| Tensile Strength ASTM D638 | |
| At Yield, psi (HPa) | 15,000 (103) |
| At Break, psi (MPa) | 13,900 (96) |
| Tensile Elongation ASTM D638 | |
| At Yield, % | 7.8 |
| At Break, % | 132 |
| Flexural Strength, psi (MPa) ASTM D790 | 21,500 (148) |
| Modulus, psi (GPa) | 447,000 (3.08) |
| Notched Izod, ft-lb/in (J/m) ASTM D256 | 1.2(639) |
| HDT at 264 psi, °F (°C) ASTM D648 | 226 (108) |
| Tensile Impact, ft-lb/in$^2$ (KJ/m$^2$) ASTM D638 | 136 (288) |

a. BA = benzoic acid.
b. If yes, 225.6 grams of deionized water were used for the batch.
c. If yes, 0.08% sodium hypophosphite was used for the batch.
d. Test bars did not yield before breaking.

TABLE 11
MECHANICAL PROPERTIES OF 75/25 TA/AA—HMDA POLYAMIDE

| Sample Code | Glass Fiber % | Tensile | | Flexural | | Notched Izod ASTM Method D256 ft-lb/in (J/m) | HDT (at 264 psi (1.7 MPa)) ASTM Method D648 °F (°C) | Polymer I.V. (60/40 Solution of Phenol/Tetra-Chloroethane at 30°C) (dl/g) |
|---|---|---|---|---|---|---|---|---|
| | | Strength ASTM Method D638 M psi (MPa) | Elongation ASTM Method D638 % | Strength ASTM Method D790 M psi (MPa) | Modulus ASTM Method D790 MM psi (GPa) | | | |
| 10CV27 | 45 | 32.1 (221) | 3.8 | 45.9 (316) | 2.01 (14.4) | 2.77 (1532) | >580 (>304) | 0.97 |
| ZSK 185 | 45 | 31.9 (220) | 4.3 | 46.4 (320) | 1.89 (13.0) | 3.45 (1908) | >580 (>304) | — |

Example B

A series of terpolyamide/Nylon 6,6 blends were prepared. The Nylon 6,6 used was Zytel 101 from Du Pont Company.

The terpolyamide was made in the 10CV Helicone reactor in the composition of 65/25/10 TA/IA/AA-HMDA. The I.V. of the terpolyamide is 1.02 dl/g. The glass fiber used for this work was PPG 3540 from PPG Industries. Blends of terpolyamide and Nylon 6,6 with or without glass fiber reinforcement were made by dry mixing without extrusion compounding. All materials were oven dried overnight before molding. The test bars were injection molded on the Boy machine. Physical testing was carried out according to ASTM standard methods. The results are shown in the table below.

TABLE 12
MATERIAL PROPERTIES OF NYLON 6,6/ TERPOLYAMIDE (TPA) (65/25/10) BLENDS

| | | Tensile | | Flexural | | | | |
|---|---|---|---|---|---|---|---|---|
| Nylon TPA Ratio | Glass Fiber % | Strength ASTM Method D638 M psi (MPa) | Elongation ASTM Method D638 % | Strength ASTM Method D790 M psi (MPa) | Modulus ASTM Method D790 MM psi (GPa) | Notched Izod ASTM Method D256 ft-lb/in (J/m) | HDT (at 264 psi) ASTM METHOD D648 °F (°C) | Water Absorption % |
| 100/0 | 0 | 9.07* (62.5) | 72.5* | 15.1 (104) | 0.35 (2.4) | 0.8 (442) | 163 (73) | 0.89 |
| 100/0 | 45 | 32.8 (226) | 5.1 | 51.7 (356) | 1.64 (11.3) | 4.5 (2448) | 472 (244) | 0.50 |
| 100/0 | 60 | 37.4 (258) | 5.2 | 58.2 (401) | 2.16 (14.9) | 5.1 (2820) | 476 (247) | 0.36 |
| 80/20 | 0 | 11.8 (81) | 4.9 | 17.3 (119) | 0.41 (2.8) | 0.5 (276) | 179 (82) | 0.84 |
| 80/20 | 45 | 32.2 (222) | 4.9 | 49.5 (341) | 1.55 (10.7) | 3.9 (2157) | 485 (252) | 0.42 |
| 80/20 | 60 | 41.1 (283) | 5.6 | 60.0 (414) | 2.36 (16.2) | 4.8 (2654) | 490 (254) | 0.30 |
| 60/40 | 0 | 12.7 (87.5) | 4.5 | 18.9 (130) | 0.45 (3.1) | 0.7 (387) | 225 (107) | 0.67 |
| 60/40 | 45 | 34.7 (239) | 5.0 | 47.5 (327) | 1.50 (10.3) | 4.0 (2212) | 489 (254) | 0.35 |
| 60/40 | 60 | 42.0 (289) | 5.3 | 63.9 (441) | 2.42 (16.7) | 4.5 (2488) | 493 (256) | 0.25 |
| 40/60 | 0 | 11.8 (81) | 3.7 | 19.8 (137) | 0.52 (3.6) | 0.7 (387) | 205 (96) | 0.52 |
| 40/60 | 45 | 31.8 (219) | 4.6 | 46.8 (323) | 1.56 (10.7) | 3.7 (2046) | 520 (271) | 0.28 |
| 40/60 | 60 | 39.1 (269) | 4.4 | 62.6 (431) | 2.37 (16.3) | 4.6 (2543) | 517 (269) | 0.20 |
| 20/80 | 0 | 8.7 (60) | 2.4 | 24.0 (165) | 0.56 (3.8) | 0.7 (387) | 223 (106) | 0.36 |
| 20/80 | 45 | 32.0 (221) | 4.2 | 49.5 (341) | 1.75 (12) | 3.1 (1710) | 543 (284) | 0.22 |
| 20/80 | 60 | 38.4 (265) | 4.7 | 64.6 (445) | 2.52 (17.3) | 4.6 (2543) | 553 (289) | 0.22 |
| 0/100 | 0 | 12.6 (87) | 3.9 | 20.3 (140) | 0.53 (3.6) | 0.8 (442) | 230 (110) | 0.56 |
| 0/100 | 45 | 37.7 (260) | 5.2 | 48.6 (335) | 1.61 (11) | 3.4 (1880) | 565 (296) | 0.29 |
| 0/100 | 60 | 40.2 (271) | 4.8 | 59.0 (407) | 2.43 (16.7) | 4.9 (2709) | 578 (303) | 0.21 |

* This sample had yield strength 10,500 psi, (72 MPa) yield elongation 5.0%.

Example C

65/25/10 TA/IA/AA Terpolyamide with Sodium Hypophosphite:

The reactants are loaded into a preheated Helicone reactor. The melt temperature is 171 °F (77 °C). The temperature control is set at 605 °F (318 °C). The agitator is set at maximum rpm (43). The headspace is purged with N2 and then the reactor vents are closed. The heat transfer oil is then applied (320 °F = 160 °C). The melt temperature increases to 438 °F (226 °C) in sixteen minutes. The reactor pressure is 120 psi (827 kPa). The reactor pressure is controlled at 120 psi (827 KPa) for five minutes as the melt temperature increases to 472 °F (244 °C). The reactor pressure is then vented to 100 psi (689 KPa) (10 psi/min (79 KPa/min)). The reactor pressure is controlled at 100 psi (689 KPa) as the melt temperature increases to 580 °F (304 °C). The reactor is then vented to atmospheric pressure (20 psi/min (140 KPa/min)-). A slow N2 sweep is applied. The reaction is then stopped immediately. The batch time is forty-five minutes. The resin I.V. is 1.35 dl/g.

With faster reaction rates, reactor pressure should be maintained above 100 psi (689 KPa) until sufficient melt temperature is reached to prevent freezing. This is true especially with a higher percent of TA.

Example D

Prepolymer of 75/15/10 TA/IA/AA—HMDA composition having about 0.2 to 0.3 I.V. was first made in the 10CV Helicone reactor (Run No. 10CV 30 to 35). The prepolymer was ground, dried, and then continuously fed to the ZSK—30 twin-screw extruder reactor according to the conditions described on Run Z—225 Table 13. Good color and gel-free pellets were obtained. The polymer had an I.V. of 1.16 dl/g.

Example E

Prepolymer of 65/25/10 TA/IA/AA—HMDA composition having about 0.12 to 0.16 I.V. was first made on the EGP unit (Run No. EGP—4). The prepolymer was ground, dried, and then continuously fed to the ZSK—30 twin-screw extruder reactor according to the operating conditions of Run ZP—1115 Table 13. Good color and gel-free pellets were obtained. The polymer had an I.V. of 1.01 dl/g.

TABLE 13

| ZSK—30 EXTRUDER REACTOR OPERATING CONDITIONS FOR POLYAMIDE AND POLY(AMIDE-IMIDE) RESINS | |
|---|---|
| Prepolymer Run No. | 10CV 30~35 |
| Prepolymer I.V. | 0.2~0.3 |
| ZSK—30 Run No. | Z—225 |
| Material, TA/IA/AA/TMA | 75/15/10/0 |
| Barrel Temp., °F (°C) | |
| Zone 1 | 400 (204) |
| Zone 2 | 505 (263) |
| Zone 3 | 670 (354) |
| Zone 4 | 655 (346) |
| Zone 5 | 620 (327) |
| Zone 6 | 600 (316) |
| Melt Temp., °F (°C) | 615 (324) |
| Screw rpm | 100 |
| Screw Torque, % | 38 |
| Polymer I.V., dl/g | 1.16 |
| Prepolymer Run No. | EGP—4 |
| Prepolymer I.V. | 0.12~0.16 |
| ZSK—30 Run No. | ZP—1115 |
| Material, TA/IA/AA | 65/25/10 |
| Barrel Temp., °F (°C) | |
| Zone 1 | 625 (329) |
| Zone 2 | 645 (341) |
| Zone 3 | 610 (321) |
| Zone 4 | 590 (310) |
| Zone 5 | 600 (316) |
| Zone 6 | 600 (316) |
| Melt Temp., °F (°C) | 610 (321) |
| Screw rpm | 50 |
| Screw Torque, % | 20—30 |
| Polymer I.V., dl/g | 1.02 |

TABLE 14
TYPICAL MATERIAL PROPERTIES OF NEAT AND 45% GLASS-FIBER FILLED POLYAMIDE AND POLY(AMIDE-IMIDE) RESINS

| Sample Code | Glass Fiber % | Tensile | | Flexural | | Notched Izod ft-lb/in (J/m) | Tensile Impact ft-lb/in (J/m) | HDT (at 264 psi) °F (°C) |
|---|---|---|---|---|---|---|---|---|
| | | Strength M psi (MPa) | Elongation % | Strength M psi (MPa) | Modulus MM psi (GPa) | | | |
| Z—225 | 0 | 11.5 (79) | 4.6 | 23.2 (160) | 0.56 (3.8) | 1.0 (533) | 80 (44) | 256 (124) |
| | 45 | 35.4 (244) | 5.2 | 54.8 (378) | 1.81 (12.5) | 2.7 (1439) | 95 (52) | >580 (>304) |
| ZP—1115 | 0 | 13.5 (93) | 25.5 | 23.5 (162) | 0.50 (3.4) | 1.8 (959) | 90 (50) | 235 (113) |
| | 45 | 34.5 (237) | 4.5 | 50.5 (348) | 1.75 (12) | 1.7 (906) | 95 (52) | 540 (282) |

* The samples yielded at 16,700 psi (115 MPa) yield strength and 6.7% yield elongation.

GENERAL PROCEDURE

The salt is prepared as follows: diacid and diamine monomers are charged to a batch reactor, which has a pitched blade turbine and is of suitable temperature and pressure ratings, to provide a homogeneous

salt solution. This is typically 425°F to 450°F (218—232°C) and 450 to 550 psig (3.1—3.8 MPa). Additional components including water, catalyst, silicone oil end capping reagent, and plasticizer are also introduced in the salt reactor. Water content of the salt can range to 25% by weight. The preferred range is about 13 to 17% by weight.

The salt is metered through a pump and pressure is increased to 1500—5000 psig (10.3—34 MPa). The resulting prepolymer then passes through a preheat zone where temperature is raised from about 425°F (218°C) to about 450°F (232°C) to about 550°F (288°C) to about 625°F (329°C). The total residence time here is 25 to 50 seconds. The resulting prepolymer is the flashed through a control valve to give an aerosol mist at a pressure of 0—400 psig (0—2.7 MPa) and the polymer is then passed through a tubular flash reactor. This reactor is designed to provide a high heat flux to the polymer and has a wall temperature of about 650°F to about 1000°F (343—538°C) melt temperature range is about 500°F to about 750°F (260—399°C) through the flash reactor. The total residence time in the reactor is about 0.1 to about 20 seconds, based on feed rate and pressure. (The inherent viscosity (I.V) is measured in 60/40 phenol tetrachloroethane at 30°C.

Conveniently, the polymer is injected directly on the screws of the twin-screw reactor denoted as ZSK in Examples H and I, to further increase the molecular weight.

Examples H and I were prepared as described in General Procedure with specific details and results noted hereinbelow.

Example F

| | |
|---|---|
| Monomers: | 10% hexamethylene diammonium adipate<br>65% hexamethylene diammonium terephthalate<br>25% hexamethylene diammonium isophthalate |
| Water Content: | 15% (by weight) |

Procedure: The diacids, diamines and water were charged to the salt reactor of room temperature. The initial charge totalled 36 lb (16,3 Kg, 50 g/moles). Additional charges were 7.2 lbs (3,3 Kg; 10 g/moles) each and were fed through lock hoppers as the salt reactor was operated in a fed batch mode. The salt reactor was a 5 gallon (18,9 l) stirred tank reactor with a pitched blade turbine, oil jacket, variable speed drive and internal coils.

Once the salt reactor has been charged, it was purged with inert gas and heated to 425°F (218°C). The pressure was set to 480 psig (3.3 MPa) by first allowing the water in the salt to reach its equilibrium pressure and then adjusting with inert gas. In the fed batch operations, the salt saw a range of residence times. They averaged about 100 minutes. Also as a result of the fed batch mode of operation, it was necessary to include a second surge vessel in the salt preperation section. This vessel, which was at 425°F (218°C) and 450 psig (3.1 MPa), was used to isolate the salt reactor during charge addition.

Upon leaving the salt section, the salt was passed through a 140 micron filter into a two headed positive displacement pump. Temperature through the pump were maintained at 425°F (218°C). Pressures were increased to 1800 psig (12.4 MPa) in the pump. Following the pump, the salt solution was passed through a preheat zone and heated to 600°F (316°C). The pressure prevented vapor formation in the preheater. Residence time in the preheater was 40 seconds.

The salt entered the flash reactor through a research control valve where pressure was reduced from 1800 psig to 400 psig (12.4 to 2.7 MPA). Wall temperature in the flash reactor were kept at 750°F (399°C) using electrical heaters but the melt temperature ranged from 525°F (274°C) to 612°F (322°C) depending on location in the flash reactor. Pressure in the flash reactor was controlled by a second RCV. Residence time in the flash reactor was estimated at 7.6 seconds. The run had a 141 lb/hr-in$^2$ (98.7 kg/hr/cm$^2$) specific mass feed rate per unit of cross sectional area.

After leaving the flash reactor, our prepolymer had an inherent viscosity (Phenol/TCE) of 0.20 to 0.24 dl/g. It was injected directly onto the screws of the extruder. An open screw design was used to facilitate vapor removal. A screw speed of 200 rpm was used to maintain minimum fill on the screws. Temperatures were 620°F (327°C) in the injection zone but they were dropped gradually to 600°F (316°C) at the die head. Following the extruder, the polymer strand was passed through a water bath and then pelletized. The mean product I.V. was 1.20 dl/g with a standard deviation of 0.09 dl/g over the 6-hour run. Total production was 64 lbs of polymer.

Example G

| | | | | | |
|---|---|---|---|---|---|
| Monomers: | 10% hexamethylene diammonium adipate | | | | |
| | 75% hexamethylene diammonium terephthalate | | | | |
| | 15% hexamethylene diammonium isophthalate | | | | |
| Water Content: | 15% (by weight) | | | | |
| Specific Mass Flow: | 149 lb/hr-in$^2$ (104,5 kg/h/cm$^2$) | | | | |
| Residence time: | Salt reactor 90 minutes | | | | |
| | Preheat zone 36 seconds | | | | |
| | Reactor zone 1.7 seconds | | | | |
| Reactor Wall Temp: | 700 °F (371 °F) Pressure: 100 psig (690 kPa) | | | | |
| Melt Temp: | 584 °F to 642 °F (307—339 °C); | | | | |
| Product I.V.: | (Phenol/TCE) | Tube: | 0.40 dl/g | ZSK: | 1.20 dl/g |
| The terms "Nylon", "Irganon", "Helicone" and "Zytel" used herein are Registered Trade Marks. | | | | | |

## Claims

**1.** A crystalline polyamide copolymer comprising substantially the following recurring moieties:

A) 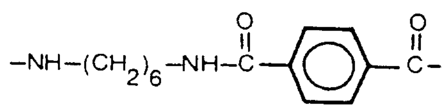

B) 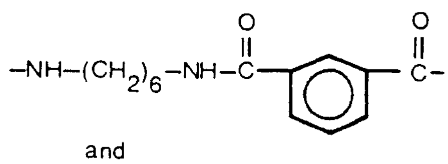

and

C) 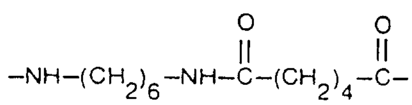

wherein the mole ratio of A:B:C units is 60—90 : 25—0 : 35—5.

**2.** A crystalline polyamide copolymer comprising substantially the following recurring moieties:

A) 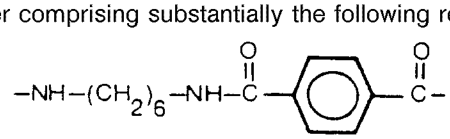

B) 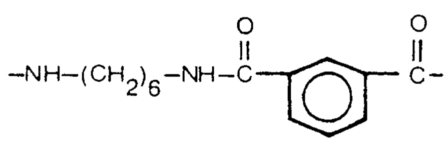

and

C) 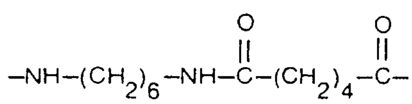

and wherein the mole ratio of A:B:C units is 60—90 : 25—5 : 35—5.

3. A crystalline polyamide copolymer of Claim 1 wherein the mole ratio of A:B:C units is 65—80: 25—5: 15—10;.

4. An injection molding composition comprising a polyamide copolymer as claimed in any preceding claim and 10 to 60 percent based on the total weight of the composition of glass fibers, glass beads, mineral fibers, or graphite fibers or mixtures of these and wherein the injection molded composition has a heat deflection temperature of 240 °C to 305 °C.

5. A composition according to Claim 4 comprising 20 to 50 percent of glass fibers, glass beads, mineral fibers, graphite fibers or mixtures of these.

**Patentansprüche**

1. Kristallines Polyamidcopolymerisat, dadurch gekennzeichnet, daß es im wesentlichen aus den folgenden wiederkehrenden Einheiten besteht:

(A) 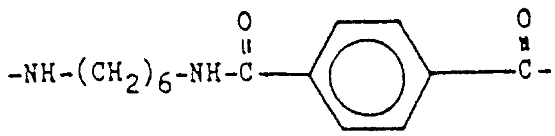

(B) 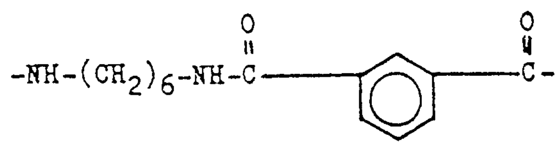

und

(C) 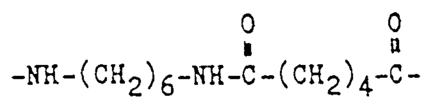 ,

worin das Molverhältnis der Einheiten A:B:C 60 bis 90 : 25 bis 0 : 35 bis 5 ausmacht.

2. Kristallines Polyamidcopolymerisat, dadurch gekennzeichnet, daß es im wesentlichen aus den folgenden wiederkehrenden Einheiten besteht:

(A) 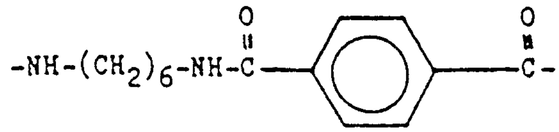

(B) 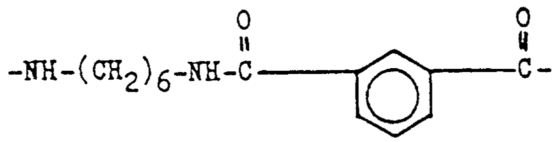

und

(C) 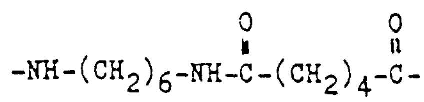 ,

worin das Molverhältnis der Einheiten A:B:C 60 bis 90 : 25 bis 5 : 35 bis 5 ausmacht.

**3.** Kristallines Polyamidcopolymerisat nach Anspruch 1, dadurch gekennzeichnet, daß das Molverhältnis aus den Einheiten A:B:C 65 bis 80 : 25 bis 5 : 15 bis 10 ausmacht.

**4.** Spritzgießmasse, dadurch gekennzeichnet, daß sie ein Polyamidcopolymerisat nach irgendeinem der vorhergehenden Ansprüche und 10 bis 60 %, bezogen auf das Gesamtgewicht der Masse, Glasfasern, Glaskügelchen, Mineralfasern oder Graphitfasern oder Mischungen hiervon enthält und daß die spritzgegossene Masse eine Wärmestandfestigkeit von 240 bis 305 °C aufweist.

**5.** Masse nach Anspruch 4, dadurch gekennzeichnet, daß sie 20 bis 50 % Glasfasern, Glaskügelchen, Mineralfasern, Graphitfasern oder Mischungen hiervon enthält.

**Revendications**

**1.** Un copolymère de polyamide cristallin comprenant essentiellement les motifs répétés suivants :

A)

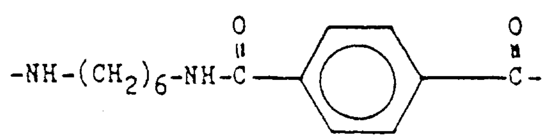

B)

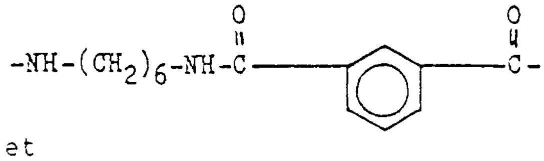

et

C)

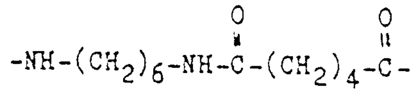

dans lequel le rapport molaire des motifs A/B/C est de 60-90/25-0/35-5

**2.** Un copolymère de polyamide cristallin comprenant essentiellement les motifs répétés suivants :

A)

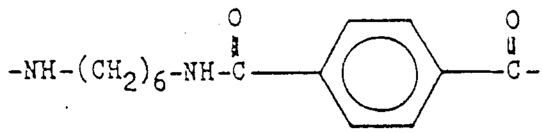

B)

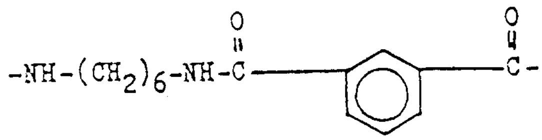

et

C)

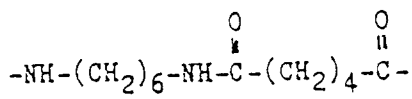

où le rapport molaire des motifs A/B/C est de 60-90/25-5/35-5

**3.** Un copolymère de polyamide cristallin selon la revendication 1, dans lequel le rapport molaire des motifs A/B/C est de 65-80/25-5/15-10.

**4.** Une composition à mouler par injection comprenant un copolymère de polyamide comme revendiqué dans l'une quelconque des revendications précédentes et 10 à 60 %, par rapport au poids total de la composition, de fibres de verre, de perles de verre, de fibres minérales ou de fibres de graphite ou de leurs mélanges, la composition à mouler par injection ayant une température de distorsion à chaud de 240 °C à 305 °C.

**5.** Une composition selon la revendication 4, comprenant 20 à 50 % de fibres de verre, de perles de verre, de fibres minérales ou de fibres de graphite ou de leurs mélanges.